# DEMANDE DE BREVET EUROPEEN

(11) **EP 0 993 780 A1**
(43) Date de publication de la demande: **19.04.2000**
(21) Numéro de dépôt: 99402511.2
(22) Date de dépôt: 12.10.1999
(51) Int. Cl.: A23L 1/185, A23L 1/18, A23P 1/14, A23L 3/015, A23L 1/202

(54) **Traitement de graines germées et jeunes pousses par chauffage et dépressurisation**

(30) Priorité: 12.10.1998 FR 9812741
(71) Demandeur: Grainnergie (S.A.), 17000 La Rochelle (FR)
(72) Inventeur: Allaf, Karim, 17000 La Rochelle (FR); Louka, Nicolas, 17000 La Rochelle (FR); Nouviaire, Armelle, 17000 La Rochelle (FR); Cascarino, Georges, 17000 La Rochelle (FR)
(74) Mandataire: Breese, Pierre

(57) **Abrégé**

La présente invention concerne le produit alimentaire constitué de graines germées et de jeunes pousses de céréales, de crucifère, d'ombellifère, d'oléagineux, de légumineuses ou d'un mélange de ces graines traitées caractérisé en ce qu'il présente un taux de matière sèche d'environ 95%, un taux d'expansion supérieur à 1,1 et une concentration en certains au moins d'éléments nutritifs supérieure à la concentration des graines avant traitement.

## Description

La présente invention concerne le domaine des produits alimentaires à base de graines germées et jeunes pousses.

Il est connu de traiter des graines germées et jeunes pousses pour les transformer en produits consommables immédiatement ou après déshydratation et réhydratation.

Les produits selon l'état de la technique subissent des traitements notamment de séchage par convection qui dégrade souvent leurs qualités organoleptiques, et diminue leurs qualités nutritionnelles.

Le but de la présente invention est de proposer des produits à utilisation alimentaire, pharmaceutique et cosmétique à base de graines germées et de jeunes pousses ou de leurs dérivées en tant que céréales améliorées.

A cet effet, l'invention concerne des produits alimentaires constitués de graines de céréales traitées caractérisées en ce qu'elles présentent un taux de matière sèche d'environ 95%, un taux d'expansion supérieur à 1,1 et une concentration en certains au moins d'éléments nutritifs supérieure à la concentration des graines avant traitement.

Selon une première variante, les graines traitées sont constitués du blé.

Selon une deuxième variante, les graines traitées sont constitués par des lentilles.

Selon une troisième variante, les graines traitées sont constitués de la luzerne.

Selon une quatrième variante, les graines traitées sont constitués du soja.

Selon une cinquième variante, les graines traitées sont constitués des pois chiche.

Selon une sixième variante, les graines traitées sont constitués de sarrasin.

Selon une autre variante, les graines traitées sont constitués d'une autre céréale, d'une crucifère, d'une ombellifère, d'une oléagineuse, d'une légumineuse ou d'un mélange de ces grains.

L'invention concerne également un procédé de préparation d'un produit alimentaire à base de graines germées et jeunes pousses.

Ce procédé est caractérisé en ce que l'on introduise dans une enceinte chauffée des graines germés ou de jeunes pousses, en ce que l'on ferme hermétiquement cette enceinte et en ce que l'on procède à une dépressurisation de ladite enceinte. Les produits sont par la suite soumis à un chauffage et une pression capables d'atteindre respectivement une température de l'ordre de 150°C et une pression de l'ordre de 6 bar. Le procédé se distingue par un passage instantané vers un vide primaire voisin de 50 mbar.

Selon un mode de mise en oeuvre préféré, le chauffage et la pression sont obtenus par injection, préalablement à l'étape de dépressurisation, de la vapeur d'eau saturée dans l'enceinte de traitement.

Selon un mode de mise en oeuvre particulier, on remet postérieurement à l'étape de dépressurisation, l'enceinte de traitement à la pression ambiante, puis que l'on isole l'enceinte de la source de dépression.

Selon une variante du procédé selon l'invention, il comporte une étape ultérieure de séchage des produits traités jusqu'à un taux de matière sèche de l'ordre de 95%.

Avantageusement, l'étape de dépressurisation est réalisée avec une vitesse d'environ 0,4 bars par seconde, de préférence avec une variation de 4 bars en 10 secondes.

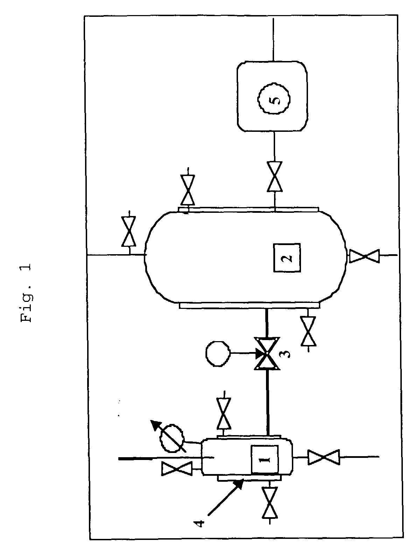

L'invention sera mieux comprise à la lecture de la description qui suit, se référant à des exemples de réalisation non limitatifs et à une figure unique représentant une vue schématique d'une installation pour la mise en oeuvre du procédé selon l'invention.

L'installation pour le traitement de graines germées jeunes pousses est constituée d'une enceinte étanche (1) raccordée à un réservoir de vide (2) d'une contenance au moins cent fois supérieure à la contenance de l'enceinte de traitement (1). A titre d'exemple, l'enceinte de traitement (1) présente une contenance de 15 litres, et le réservoir de vide (2) une contenance de 1600 litres.

L'enceinte de traitement (1) est entourée par une double enveloppe (4). L'espace annulaire compris entre les deux enveloppes présente des raccords pour l'injection et l'évacuation d'eau, de vapeur d'eau ou d'un autre fluide de chauffage ou de réfrigération. La circulation de vapeur d'eau dans la double enveloppe assure un chauffage de l'enceinte de traitement (1) à une température de 150°C.

L'enceinte de traitement (1) présente en outre un raccord permettant d'injecter de la vapeur d'eau à l'intérieur de l'enceinte, sur les produits à traiter.

Cette enceinte de traitement présente un couvercle permettant d'assurer la fermeture étanche de l'enceinte après introduction des produits à traiter.

L'enceinte (2) communique avec le réservoir de vide (2) grâce à une vanne (3) et un conduit de grande section pour garantir un débit élevé. Le réservoir de vide (2) est relié à une pompe à vide (5).

Les produits à traiter sont introduits dans l'enceinte de traitement (1). Ils sont chauffés à environ 150°C, puis soumis à de la vapeur d'eau injectée dans l'enceinte en surpression. La vanne commandant la communication entre le réservoir de vide (2) et l'enceinte (1) est alors ouverte, et la pression chute d'environ 4 bars en 10 secondes.

Lorsque la pression minimale est atteinte, on referme la vanne de mise en liaison avec le réservoir de vide puis on ouvre la vanne assurant la mise à l'atmosphère de l'enceinte de traitement.

Le traitement de blé germé permet d'obtenir d'excellentes qualités organoleptiques et nutritionnelles, notamment en terme de glucides, protéines, matières minérales, fibres alimentaires et minéraux.

| % de matière sèche | Blé germé séché par convection | Blé traité par DIC |
|---|---|---|
| Lipides (g) | 2 | 1,8 |
| Protides (g) | 10,6 | 12,6 |
| Glucides (g) | 85,5 | 83,7 |
| Matières minérales (g) | 1,9 | 1,9 |
| dont Fibres | 10,5 | 10,5 |
| **Minéraux pour 100 g** | | |
| Phosphore (%) | 0,414 | 0,414 |
| Calcium (mg) | 58,2 | 74,600 |
| Magnésium (mg) | 113 | 132 |
| Fer (mg) | 3,64 | 4,48 |
| Zinc (mg) | 27,6 | 31,6 |
| **Vitamines pour 100 g** | | |
| A (UI) | 168,7 | 216,6 |
| E (mg) | 1,4 | 10,0 |
| B2 (mg) | 0,3 | 0,26 |
| B6 (mg) | 0,6 | 0,23 |
| C (mg) | 0,21 | 0,79 |
| B12 (µg) | 0,2 | 0,24 |

Par ailleurs, le blé traité par D.I.C. selon l'invention est sucré et croustillant, et présente un aspect doré. Le blé ainsi traité peut être consommé tel quel, déshydraté ou réhydraté avant consommation ou encore réduit en poudre ou en flocons pour la préparation de purées, bouillies ou soupes.

L'application du procédé de traitement D.I.C. à des lentilles a permis de réduire sensiblement le temps de séchage, en le divisant d'un facteur de 3.

| % de matière sèche | Lentilles séchées par convection | Lentilles séchées par D.I.C. |
|---|---|---|
| Lipides (g) | 1,94 | , 5 |
| Protides (g) | 29,34 | 1,2 |
| Glucides (g) | 65,12 | 3,6 |
| Matières minérales (g) | 3,59 | ,7 |
| dont Fibres | | 16,6 |

| **Minéraux pour 100 g** | | |
|---|---|---|
| Phosphore (mg) | | 46,9 |
| Calcium (mg) | | 28,2 |
| Magnésium (mg) | | 04,3 |
| Fer (mg) | | ,1 |
| Zinc (mg) | | ,1 |

| **Vitamines pour 100 g** | | |
|---|---|---|
| A (UI) | | 9,6 |
| E (mg) | | ,2 |
| B2 (mg) | | ,3 |
| B6 (mg) | | ,8 |
| C (mg) | | 5,8 |
| B12 (µg) | | ,03 |

Les analyses nutritives montrent que le traitement selon l'invention affecte très peu la richesse en terme de lipides, glucides, protides et matières minérales. L'aspect gustatif des lentilles est nettement amélioré par le procédé de traitement selon l'invention, avec un développement de la croustillance et du goût sucré. Les germes restent attachés à la graine.

L'application du procédé de traitement D.I.C. à du soja a permis de réduire sensiblement le temps de séchage, en le divisant d'un facteur de 2.

| % de matière sèche | soja séché par convection | Soja traité par D.I.C. |
|---|---|---|
| Lipides (g) | 1,3 | 1,3 |
| Protides (g) | 29 | 28,9 |
| Glucides (g) | 47,3 | 47,0 |
| Matières minérales (g) | 3,7 | 3,7 |
| Fibres | | 19.1 |

| **Minéraux pour 100 g** | | |
|---|---|---|
| Phosphore (mg) | | 417,9 |
| Calcium (mg) | | 147,9 |
| Magnésium (mg) | | 142,9 |
| Fer (mg) | | 5 |
| Zinc (mg) | | 3,9 |

| **Vitamines pour 100 g** | | |
|---|---|---|
| A (UI) | | 24,3 |
| E (mg) | | 0,4 |
| B2 (mg) | | 0,4 |
| B6 (mg) | | 0,4 |
| C (mg) | | 21,7 |
| B12 (µg) | | 0,09 |

Les analyses nutritives montrent que le traitement selon l'invention affecte très peu la richesse en terme de lipides, glucides, protides et matières minérales. L'aspect gustatif du soja est nettement amélioré par le procédé de traitement selon l'invention, avec un développement de la croustillance et du goût sucré. Les germes restent attachés à la graine.

Des résultats similaires très satisfaisants sont également obtenus avec les pois chiche, le sarrasin, l'alfalfa (la luzerne) et diverses autres graines germées et jeunes pousses.

## Revendications

1. Produit alimentaire constitué de graines germées et de jeunes pousses de céréales, de crucifère, d'ombellifère, d'oléagineux, de légumineuses ou d'un mélange de ces graines traitées caractérisé en ce qu'il présente un taux de matière sèche d'environ 95%, un taux d'expansion supérieur à 1,1 et une concentration en certains au moins d'éléments nutritifs supérieure à la concentration des graines avant traitement.

2. Produit alimentaire selon la revendication 1 caractérisé en ce que les graines traitées sont constituées du blé.

3. Produit alimentaire selon la revendication 1 caractérisé en ce que les graines traitées sont constituées par des lentilles.

4. Produit alimentaire selon la revendication 1 caractérisé en ce que les graines traitées sont constituées de la luzerne.

5. Produit alimentaire selon la revendication 1 caractérisé en ce que les graines traitées sont constituées du soja.

6. Produit alimentaire selon la revendication 1 caractérisé en ce que les graines traitées sont constituées des pois chiche.

7. Produit alimentaire selon la revendication 1 caractérisé en ce que les graines traitées sont constituées d'autres céréales, crucifères, ombellifères, oléagineux, légumineuses ou d'un mélange de ces grains.

8. Procédé de préparation d'un produit alimentaire à base de graines germées et jeunes pousses caractérisé en ce que l'on introduise dans une enceinte chauffée des graines germés, en ce que l'on ferme hermétiquement cette enceinte et en ce que l'on procède à une dépressurisation de ladite enceinte, puis à une remise à la pression atmosphérique de l'enceinte.

9. Procédé de préparation d'un produit alimentaire selon la revendication précédente caractérisé en ce que l'enceinte est chauffée à une température de l'ordre de 150°C.

10. Procédé de préparation d'un produit alimentaire selon la revendication 8 ou 9 caractérisé en ce que, préalablement à l'étape de dépressurisation, on injecte de la vapeur d'eau saturée sur les graines germées et jeunes pousses introduites dans l'enceinte de traitement.

11. Procédé de préparation d'un produit alimentaire selon l'une des revendications 8 à 10 caractérisé par le fait que la haute pression/haute température s'effectue par des paliers successifs de vapeur d'eau .

12. Procédé de préparation d'un produit alimentaire selon l'une quelconque des revendications 8 à 11 caractérisé en ce que, postérieurement à l'étape de dépressurisation, on isole l'enceinte de la source de dépression puis que l'on mette l'enceinte de traitement à la pression ambiante.

13. Procédé de préparation d'un produit alimentaire selon l'une quelconque des revendications 8 à 12 caractérisé en ce qu'il comporte une étape ultérieure de séchage des produits traités jusqu'à un taux de matière sèche de l'ordre de 95%.

14. Procédé de préparation d'un produit alimentaire selon l'une quelconque des revendications 8 à 13 caractérisé en ce que l'étape de dépressurisation est réalisée avec une vitesse d'environ 0,4 bars par secondes.

15. Procédé de préparation d'un produit alimentaire selon l'une quelconque des revendications 8 à 12 caractérisé en ce que le produit est récupéré et conditionné d'une façon telle que l'on préserve sa faible contamination bactérienne pour sa commercialisation directe.
